# EUROPÄISCHE PATENTANMELDUNG

(11) **EP 3 964 332 A1**
(43) Veröffentlichungstag der Anmeldung: **09.03.2022**
(21) Anmeldenummer: 21192525.0
(22) Anmeldetag: 23.08.2021
(51) Int. Cl.: B25B 5/00, B25B 5/16, B23Q 3/06, B23B 31/16

(54) **SPANNVORRICHTUNG**

(30) Priorität: 31.08.2020 DE 102020122709
(71) Anmelder: Gressel AG, 8355 Aadorf (CH)
(72) Erfinder: Schlüssel, Marcel, 8303 Bassersdorf (CH); Ferchow, Julian, 8008 Zürich (CH); Englberger, Gokula, 8032 Zürich (CH); Kälin, Dominik, 8051 Zürich (CH)
(74) Vertreter: Charrier Rapp & Liebau

(57) **Zusammenfassung**

Die Erfindung betrifft eine Spannvorrichtung mit mindestens drei Spanneinrichtungen (1; 2), die gegeneinander bewegbare Spannflächen (5; 20; 28) zum Spannen von mindestens drei an einem Werkstück beabstandet angeordneter Hilfselemente aufweisen. Um ein verspannungs- und verzugsfreies Spannen mit einer genauen Positionierung zu ermöglichen, sind die Spannflächen (5; 20; 28) konkav ausgebildet.

## Beschreibung

Die Erfindung betrifft eine Spannvorrichtung nach dem Oberbegriff des Patentanspruchs 1.

Eine derartige Spannvorrichtung ist aus der DE 10 2017 115 696 A1 bekannt. Diese enthält mehrere an einem Futterkörper radial verstellbar angeordnete Spannbacken, die jeweils zwei unter einem Winkel zueinander angeordnete seitliche Spannflächen aufweisen. Die Spannbacken sind derart ausgebildet und angeordnet, dass zwischen den seitlichen Spannflächen nebeneinander angeordneter Spannbacken voneinander beabstandete Klemmspalte zur Aufnahme und zum Spannen mehrerer voneinander beabstandeter Hilfselemente gebildet werden. Dadurch kann ein Werkstück mit Hilfe von bolzen- oder stiftförmigen Hilfselementen gespannt werden, die speziell für den Spannvorgang an dem Werkstück angebracht werden und nach einer Bearbeitung wieder einfach entfernt werden können. Die Spannkraft wird also nicht direkt in das Werkstück, sondern in die speziell dafür vorgesehenen und als Verbrauchsteil einfach zu fertigenden Hilfselemente eingeleitet. Bei der bekannten Spannvorrichtung sind die Spannflächen derart ausgebildet, dass sich die Spannbacken in die Hilfselemente eindrücken und die Hilfselemente plastisch verformen. Dadurch kann eine sichere Spannung erreicht werden.

Aufgabe der Erfindung ist es, eine Spannvorrichtung der eingangs genannten Art zu schaffen, die ein verspannungs- und verzugsfreies Spannen mit einer genauen Positionierung ermöglicht.

Diese Aufgabe wird durch eine Spannvorrichtung mit den Merkmalen des Anspruchs 1 gelöst. Zweckmäßige Weiterbildungen und vorteilhafte Ausgestaltungen der Erfindung sind in den Unteransprüchen angegeben.

Bei der erfindungsgemäßen Spannvorrichtung sind die Spannflächen an den mindestens drei separaten Spanneinrichtungen konkav ausgebildet. Dadurch können auch komplexe Werkstücke mit Hilfe von vorzugsweise kugelförmigen Hilfselementen stabil und positionsgenau gespannt werden. Die Spannvorrichtung ist besonders zum Spannen von Werkstücken geeignet, die mit additiven Fertigungsverfahren z.B. im 3D-Druckverfahren hergestellt und anschließend weiterbearbeitet werden. Bei derartigen Werkstücken können die Hilfselemente, mittels derer die Werkstücke über entsprechende Formbacken in einer geometrisch definierten Lage gespannt werden können, mit einer vorbestimmten Spanngeometrie direkt an dem Werkstück angeformt werden. Die Hilfselemente können eine Sollbruchstelle aufweisen, so dass sie nach der Bearbeitung einfach abgebrochen werden können. Das Hilfselement kann z.B. an der Schnittstelle zum Werkstück eine Ringkerbe oder Unterbrüche im Querschnitt aufweisen, so dass am Ende die Bruchkante genau auf der Werkstückfläche verläuft und keine Nacharbeit erforderlich ist. Die Hilfselemente weisen vorzugsweise eine Kugelform auf. Die Hilfselemente können auch andere abgerundete Formen oder Mehrflächenkörper mit Rundungen aufweisen. Bei einer Aufspannung über drei kugelförmige Hilfselemente kann ein Werkstück mit hoher Steifigkeit und in allen Richtungen positionsgenau ausgerichtet gespannt werden. Eine derartige Aufspannung ermöglicht ein verspannungs- und verzugsfreies Spannen mit einer genauen Positionierung.

Die Spanneinrichtungen können als backenförmige Spanneinrichtungen mit gegeneinander verfahrbaren Spannbacken und/oder als stangenförmige Spanneinrichtungen mit gegeneinander bewegbaren Spannklauen ausgebildet sein. Die backenförmigen Spanneinrichtungen können an einer zentralen Spanneinheit angeordnet sein. Um die zentrale Spanneinheit können mehrere stangenförmige Spanneinrichtungen angeordnet sein. Durch die zentrale Spanneinheit kann ein Werkstück über drei Spannpunkte lagegenau und in allen Richtungen referenziert gespannt werden. Über die stangenförmigen Spanneinrichtungen können die zentral gespannten Werkstücke zusätzlich abgestützt werden. Dadurch können auch schwingungsanfällige Werkstücke sicher gespannt werden. Bei leichten und filigranen Werkstücken kann die Aufspannung auch nur durch die stangenförmigen Spanneinrichtungen erfolgen.

Die Spannflächen an den gegeneinander verfahrbaren Spannbacken der backenförmigen Spanneinrichtungen können zweckmäßigerweise als Vertiefungen mit einem kreisbogenförmigen Querschnitt ausgebildet sein. Die Spannflächen an den gegeneinander bewegbaren Spannklauen der stangenförmigen Spanneinrichtungen sind vorzugsweise als kugelsegmentförmige Vertiefungen ausgebildet.

In einer bevorzugten Ausführung sind die backenförmigen Spanneinrichtungen an einem gemeinsamen Träger angeordnet. An dem Träger können außerdem eine oder mehrere weitere, um eine Vertikalachse drehbare oder in X- und Y-Richtung schwimmende, Spanneinrichtungen mit zwei ebenfalls gegeneinander beweglichen Spannbacken angeordnet sein. Durch die zusätzliche drehbare oder schwimmende Spanneinrichtung kann ein Werkstück mit einem weiteren Hilfselement gespannt werden. Die drehbare oder schwimmende Anordnung der weiteren Spanneinrichtung ermöglicht eine Ausrichtung der Spannbacken zur Anpassung an die Position des weiteren Hilfselements. Beim Schließen der Spannbacken können sich diese durch Drehung der Spanneinrichtung oder Verschiebung in X- und Y-Richtung so an das Hilfselement anlegen, dass keine Querkräfte in das Werkstück eingeleitet werden.

Um den Träger können auf einer Grundplatte zweckmäßigerweise mehrere voneinander beabstandete Kugelzapfen zur Befestigung der stangenförmigen Spanneinrichtungen angeordnet sein. Auf diesen Kugelzapfen können die stangenförmigen Spanneinrichtungen montiert und in gewünschte Richtungen geschwenkt werden.

In einer möglichen Ausführung können die backenförmigen Spanneinrichtungen jeweils zwei gegeneinander bewegbare Spannbacken mit jeweils einer Spannfläche aufweisen. Die backenförmigen Spanneinrichtungen können auch nur jeweils eine radial verschiebbare Spannbacke mit zwei unter einem Winkel zueinander angeordneten seitlichen Spannflächen aufweisen. Diese Spannbacken sind derart ausgestaltet und so auf dem Träger angeordnet, dass zwischen den einander zugewandten Spannflächen zweier aufeinanderfolgender Spannbacken ein zum Spannen eines Hilfselements dienender Klemmspalt gebildet ist. Durch Radialbewegung der Spannbacken kann die Breite der Klemmspalte vergrößert oder verkleinert werden.

Die stangenförmigen Spanneinrichtungen weisen in vorteilhafter Weise eine teleskopierbare Stange mit einem rohrförmigen unteren Stangenteil und einem in dem unteren Stangenteil verschiebbar geführten stabförmigen oberen Stangenteil auf. Durch die in der Länge verstellbaren stangenförmigen Spanneinrichtungen können Werkstücke an mehreren Stellen abgestützt und zusätzlich gehalten werden. Durch die Flexibilität der stangenförmigen Spanneinrichtungen kann der Spannpunkt relativ frei im Raum positioniert und ohne Lageänderung verzugsfrei verspannt werden.

In einer zweckmäßigen Ausführung können an dem unteren Ende des unteren Stangenteils und dem oberen Ende des oberen Stangenteils jeweils Spannelemente mit zwei gegeneinander beweglichen Spannklauen angeordnet sein. Durch das am unteren Stangenteil angeordnete untere Spannelement mit den beiden Spannklauen kann die stangenförmige Spanneinrichtung auf einem auf der Grundplatte angeordneten Kugelzapfen befestigt werden. Durch das am oberen Stangenteil angeordnete obere Spannelement mit den beiden Spannklauen kann ein am Werkstück angeordnetes kugelförmiges Hilfselement gespannt werden. Die Kugelzapfen können alternativ auch direkt an den oberen oder seitlichen Flächen des Spannelements oder den Spannbacken angebracht werden.

In einer weiteren vorteilhaften Weise können an dem oberen Stangenteil ein oder mehrere Kugelzapfen angeordnet sein. Dadurch können die mit dem Werkstück verbundenen stangenförmigen Spannelemente durch zusätzliche stangenförmige Spannelemente gegenüber der Grundplatte abgestützt werden. Somit kann die Position der mit dem Werkstück verbundenen stangenförmigen Spannelemente stabilisiert werden. Der beschriebene Kugelzapfen kann alternativ auch zylinderförmig, als Vieleck oder als gerundeter, z.B. oval ausgebildeter Körper ausgeführt sein.

Bei den backenförmigen Spanneinrichtungen können die Spannbackenpaare über einen gemeinsamen Antrieb angetrieben werden. Die Spannbackenpaare können aber auch über gesonderte Antriebe betätigt werden. So können z.B. jeweils zwei zusammengehörende Spannbacken durch jeweils einen Antrieb betätigt werden. Dadurch ist es auch möglich, einzelne Backenpaare zeitlich versetzt zu schließen. Ein gesonderter Antrieb zweier zusammengehöriger Spannbacken kann z.B. durch einen Kolbenantrieb mit einer Keilverstellung erfolgen.

Die backenförmigen Spanneinrichtungen können als zentrierende Spanneinrichtungen oder als ausgleichende Spanneinrichtungen mit z.B. drehbaren und/oder schwimmenden Spannbacken ausgebildet sein. Bei den ausgleichenden Spanneinrichtungen können sich die Backenpaare aufgrund ihrer zusätzlichen Bewegungsmöglichkeiten beim Spannvorgang an die Position der zum Spannen vorgesehenen Hilfselemente angleichen. Dadurch wird die Gestaltungsfreiheit beim Anbringen der Hilfselemente erleichtert. Spannungen, die durch Toleranzschwankungen entstehen und das Werkstück deformieren können, werden durch die ausgleichenden Spanneinrichtungen ebenfalls vermieden.

Bei den ausgleichenden Spanneinrichtungen können die Backenpaare z.B. durch einen Spannkeil verschoben werden, der drehbar und/oder schwimmend mit dem Kolben eines Kolbenantriebs verbunden ist. Eine zeitlich verzögerte Schließwirkung kann durch eine entsprechende Ausgestaltung der Fluidversorgung der Kolbenantriebe einfach beeinflusst werden. Die ausgleichenden Spanneinrichtungen können auch mit reduziertem Zuflussquerschnitt angesteuert werden, so dass die ausgleichenden Spanneinrichtungen langsamer als die zentrierenden Spanneinrichtungen schließen.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Spannvorrichtung in einer Seitenansicht;
- **Figur 2**: die Spannvorrichtung von Figur 1 in einer Draufsicht;
- **Figur 3**: eine stangenförmige Spanneinrichtung der in Figur 1 gezeigten Spannvorrichtung in einer Vorderansicht;
- **Figur 4**: eine stangenförmige Spanneinrichtung der in Figur 1 gezeigten Spannvorrichtung in einem Längsschnitt;
- **Figur 5**: ein zweites Ausführungsbeispiel einer Spannvorrichtung;
- **Figur 6**: eine Schnittansicht der Spannvorrichtung von Figur 6;
- **Figur 7**: eine zentrale Spanneinheit der Spannvorrichtung von Figur 2 in einer Vorderansicht in Richtung des Pfeils Z von Figur 2;
- **Figur 8**: die zentrale Spanneinheit von Figur 7 in einer Seitenansicht;
- **Figur 9**: die zentrale Spanneinheit von Figur 7 in einer Draufsicht;
- **Figur 10**: die zentrale Spanneinheit von Figur 7 in einer Ansicht von Unten;
- **Figur 11**: eine Schnittansicht entlang der Linie A-A von Figur 7;
- **Figur 12**: eine Schnittansicht entlang der Linie B-B von Figur 7;
- **Figur 13**: eine Schnittansicht entlang der Linie C-C von Figur 8;
- **Figur 14**: eine Schnittansicht entlang der Linie D-D von Figur 8;
- **Figur 15**: eine alternative zentrale Spanneinheit mit schwimmenden Spannbacken in einer ersten Schnittansicht und
- **Figur 16**: die Spanneinheit mit schwimmenden Spannbacken von Figur 15 in einer zweiten Schnittansicht.

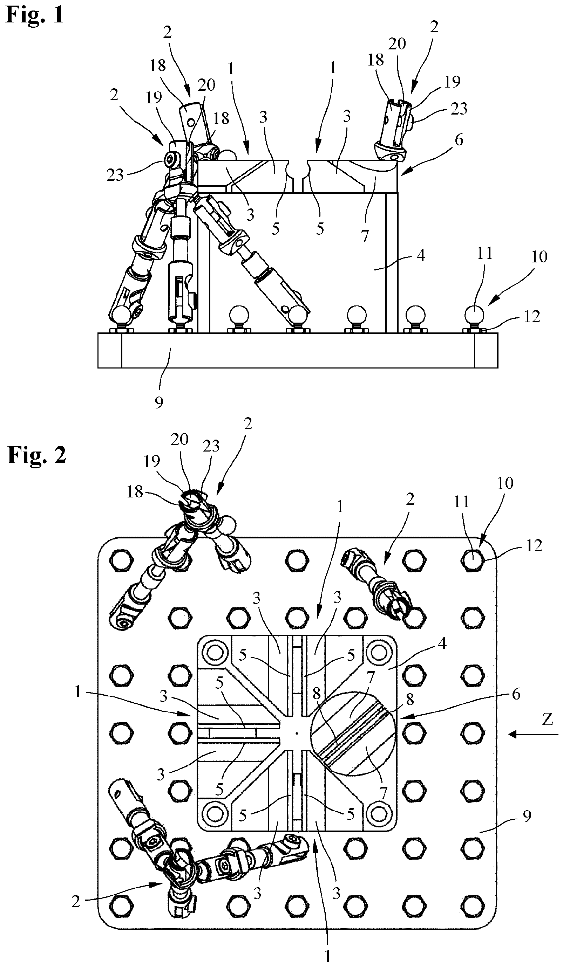

Die in den Figuren 1 und 2 in verschiedenen Ansichten gezeigte Spannvorrichtung ist konzipiert für das Spannen von Werkstücken, an denen mehrere voneinander beabstandete Hilfselemente angebracht sind. Derartige Hilfselemente können z.B. an einem durch additive Fertigungsverfahren hergestellten Werkstück direkt an dem Werkstück angeformt und nach einer anschließenden Bearbeitung wieder entfernt werden. Die Spannkraft wird also nicht unmittelbar in das Werkstück, sondern in die speziell dafür vorgesehenen und lediglich als Hilfsteil für den Spannvorgang vorgesehenen Hilfselemente eingeleitet. Der Spannvorgang erfolgt somit an den Hilfselementen, so dass das eigentliche Werkstück möglicht wenig beeinträchtigt wird. Die Hilfselemente können ohne Auswirkungen auf das eigentliche Werkstück auch z.B. durch Eindrücken eines Spannprofils verformt werden, wodurch eine sichere und positionsgenaue Halterung gewährleistet ist. Da die Hilfselemente üblicherweise auch nur an einer Seite des Werkstücks vorgesehen sind, können die übrigen Seiten des Werkstücks ohne Einschränkungen bearbeitet werden, so dass die Zugänglichkeit für die Bearbeitung gegenüber der konventionellen Spannung erheblich verbessert wird. Aufgrund des Spannens der Hilfselemente können die Werkstücke auch völlig unterschiedliche Formen und Konturen aufweisen. Durch die Hilfselemente kann auch unabhängig vom Werkstück eine definierte Schnittstelle mit reproduzierbaren Spannbedingungen geschaffen werden.

Zum Spannen mehrerer voneinander beanstandeter Hilfselemente weist die gezeigte Spannvorrichtung mehrere backenförmige Spanneinrichtungen 1 und mehrere stangenförmige Spanneinrichtungen 2 auf. Die backenförmigen Spanneinrichtungen 1 werden in der gezeigten Ausführung durch entgegengesetzt zueinander verfahrbare Spannbacken 3 gebildet, die auf einem blockförmigen Träger 4 verschiebbar geführt sind. Bei dem gezeigten Ausführungsbeispiel sind auf dem Träger 4 drei um jeweils 90° zueinander versetzte backenförmige Spanneinrichtungen 1 mit jeweils zwei gegeneinander verfahrbaren Spannbacken 3 angeordnet. Durch einen entsprechenden Stellantrieb können die Spannbacken 3 der drei Spanneinrichtungen 1 entweder zusammen- oder auseinandergefahren werden. Die Spannbacken 3 der Spanneinrichtungen 1 weisen an den einander zugwandten Seiten jeweils konkave Spannflächen 5 zum Spannen eines kugelförmigen Hilfselements auf. Durch die drei Spanneinrichtungen 1 mit den als Halbschalen ausgebildeten Spannbacken 3 und den als Vertiefungen mit einem kreisbogenförmigen Querschnitt ausgebildeten Spannflächen 5 kann ein mit kugelförmigen Hilfselementen versehenes Werkstück positionsgenau an drei Punkten gespannt werden.

Auf dem Träger 4 ist außerdem eine um eine Vertikalachse drehbare weitere Spanneinrichtung 6 mit zwei ebenfalls gegeneinander beweglichen Spannbacken 7 angeordnet. Die beiden Spannbacken 7 weisen an den einander zugewandten Innenseiten ein z.B. als Gripkontur ausgebildetes Spannprofil 8 auf. Durch diese Spannprofil 8 können sich die Spannbacken 7 in ein am Werkstück vorgesehenes Hilfselement eindrücken und so für eine form- und kraftschlüssige Spannung sorgen.

Der Träger 4 mit den drei Spanneinrichtungen 1 und der zusätzlichen drehbaren Spanneinrichtung 6 bildet eine zentrale Spanneinheit, mit der ein Werkstück einfach und schnell gespannt werden kann. Die zentrale Spanneinheit kann derart ausgelegt sein, dass zunächst die Spannbacken 3 der drei Spanneinrichtungen 1 schließen und das Werkstück ausrichten. Die Spannbacken 7 der zusätzlichen Spanneinrichtung 6 können zeitverzögert erst nach dem Schließen der Spannbacken 3 zusammenfahren und ein weiteres Hilfselement ohne Höhenausrichtung spannen. Durch die drehbare Anordnung der zusätzlichen Spanneinrichtung 6 können sich die Spannbacken 7 ausrichten und an die Position eines entsprechenden Hilfselements anpassen. Beim Schließen der Spannbacken 7 legen sich diese an das Hilfselement an, wobei erst mit Spanndruck eine seitliche Fixierung durch Form- und Kraftschluss erfolgt.

Der blockförmige Träger 4 ist auf einer Grundplatte 9 befestigt. Auf der Grundplatte 9 sind um den Träger 4 mehrere voneinander beabstandete Kugelzapfen 10 zur Befestigung der stangenförmigen Spanneinrichtungen 2 angeordnet. Die Kugelzapfen 10 enthalten einen Kugelkopf 11 und sind über einen mit einem Außensechskant 12 versehenen Gewindeschaft in entsprechenden Gewindebohrungen der Grundplatte 9 montiert. Die Kugelzapfen 10 können in einem gleichmäßigen Abstand und mehreren Reihen um den Träger 4 angeordnet sein.

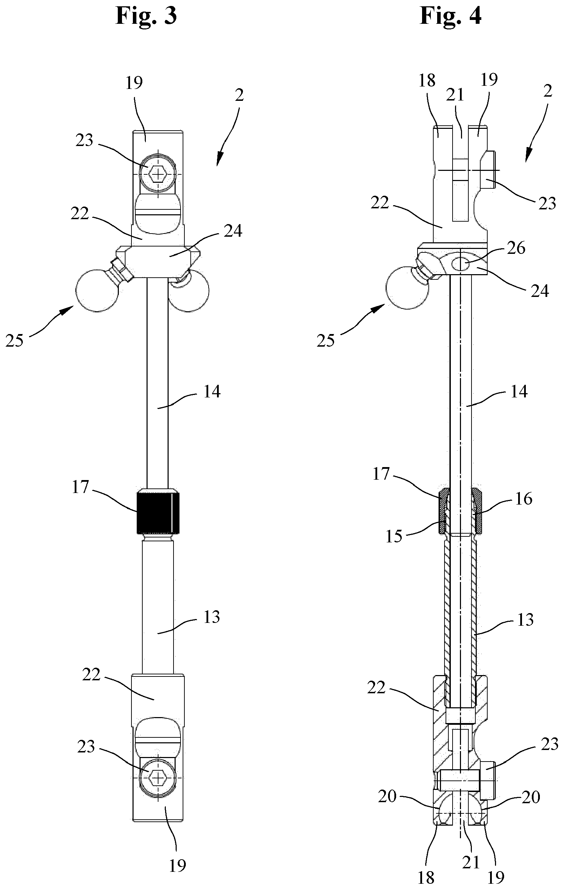

Die in den Figuren 3 und 4 gesondert dargestellten stangenförmigen Spanneinrichtungen 2 weisen eine teleskopierbare Stange mit einem rohrförmigen unteren Stangenteil 13 und einem in dem unteren Stangenteil 13 verschiebbar geführten stabförmigen oberen Stangenteil 14 auf. Das rohrförmige untere Stangenteil 13 enthält an seinem oberen Ende einen mit einem Außengewinde 15 versehenen Klemmbereich 16, auf dem eine Überwurfmutter 17 angeordnet ist. Durch Aufschrauben der Überwurfmutter 17 auf das Außengewinde 15 kann der obere Klemmbereich 16 des unteren Stangenteils 13 zusammengedrückt und dadurch das stabförmige obere Stangenteil 14 in einer gewünschten Stellung geklemmt werden. Dadurch kann die Länge der stangenförmigen Spanneinrichtung 2 justiert werden. Andere Klemmeinrichtungen für die Teleskopstangenklemmung und die Kugelklemmung wie z.B. Klemmbride, Exzenterschraube, Hydraulikklemmung oder Seilzugklemmung sind ebenfalls möglich.

An dem unteren Ende des unteren Stangenteils 13 und dem oberen Ende des oberen Stangenteils 14 sind Spannelemente mit zwei gegeneinander beweglichen Spannklauen 18 und 19 angeordnet. Wie aus Figur 4 hervorgeht, weisen die beiden als Halbschalen ausgebildete Spannklauen 18 und 19 an den einander zugewandten Innenseiten ebenfalls konkave Spannflächen 20 auf. Hier sind die Spannflächen 20 als kugelsegmentförmige Vertiefungen ausgeführt. Bei der gezeigten Ausführung werden die beiden Spannklauen 18 und 19 durch eine mit einem Schlitz 21 versehene Hülse 22 gebildet. Zwischen den beiden durch den Schlitz 21 voneinander getrennten Spannklauen 18 und 19 ist eine Spannschraube 23 angeordnet. Durch Anziehen der Spannschraube 23 können die beiden Spannklauen 18 und 19 zusammengedrückt werden. Beim Lösen der Spannschraube 23 bewegen sich die elastisch biegsamen Spannklauen 18 und 19 wieder in die Ausgangsstellung zurück.

Durch das am unteren Stangenteil 13 angeordnete untere Spannelement mit den beiden Spannklauen 18 und 19 kann die stangenförmige Spanneinrichtung 2 auf einem auf der Grundplatte 9 angeordneten Kugelzapfen 10 befestigt werden. Durch das am oberen Stangenteil 14 angeordnete obere Spannelement mit den beiden Spannklauen 18 und 19 kann ein am Werkstück angeordnetes kugelförmiges Hilfselement gespannt werden. Zur Montage der stangenförmigen Spanneinrichtung 2 kann das am unteren Stangenteil 13 angeordnete untere Spannelement mit den beiden noch nicht gespannten Spannklauen 18 und 19 auf einen entsprechenden Kugelzapfen 10 aufgesteckt werden. Dann kann das obere Spannelement an dem noch nicht fixierten, axial verschiebbaren oberen Stangenteil 14 mit einem kugelförmigen Hilfselement am Werkstück verbunden werden. Die Spannklauen 18 und 19 am oberen und unteren Spannelement können dann durch Anziehen der Spanschrauben 23 zur Klemmung zusammengedrückt werden. Anschließend kann die Überwurfmutter 17 festgezogen und dadurch die Auszugslänge des oberen Stangenteils 14 blockiert werden. Durch die stangenförmigen Spanneinrichtungen 2 kann ein Werkstück zusätzlich gespannt oder abgestützt werden. Dadurch können auch große und schwingungsanfällige Werkstücke positionsgenau und sicher gespannt werden.

Ein schwingungsanfälliges Werkstück kann aber auch durch eine oder mehrere stangenförmige Spanneinrichtungen in sich selber versteift werden, indem zwischen zwei oder mehreren Werkstückflächen stangenförmige Spanneinrichtungen zwischen den Werkstückflächen angebracht werden. So kann z.B. eine stangenförmige Spanneinrichtungen an einem U-förmigen Werkstück als Verbindungsstange zwischen den zwei Werkstückschenkeln angebracht werden.

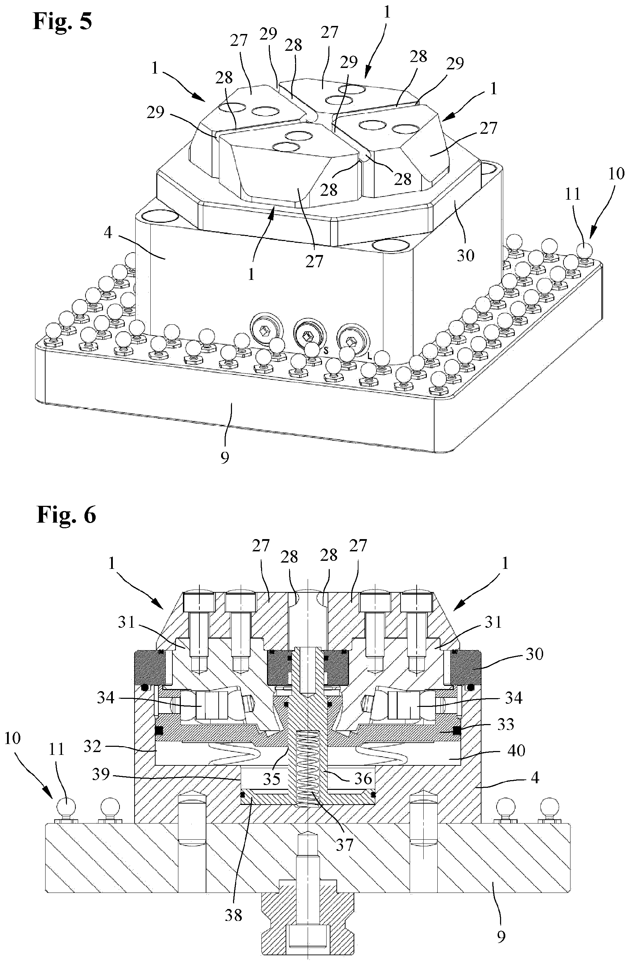

An einem Halteteil 24 an der Hülse 22 des am oberen Stangenteil 14 angeordneten oberen Spannelements sind weitere Kugelzapfen 25 montierbar. Hierzu weist das Halteteil 24 mehrere über den Umfang verteilte, nach unten geneigte Bohrungen 26 zur Montage von Kugelzapfen 25 auf. Über die hier unter einen Winkel von 45° zu einer Längsachse des oberen Stangenteils 14 geneigten Kugelzapfen 25 können die mit dem Werkstück verbundenen stangenförmigen Spannelemente 2 durch zusätzliche stangenförmige Spannelemente 2 gegenüber der Grundplatte abgestützt werden. Dadurch kann die Position der mit dem Werkstück verbundenen stangenförmigen Spannelemente 2 stabilisiert werden. In den Figuren 5 und 6 ist ein weiteres Ausführungsbeispiel einer Spannvorrichtung gezeigt. Auch bei dieser Ausführung weist die Spannvorrichtung eine zentrale Spanneinheit mit mehreren auf einem Träger 4 verschiebbar angeordneten backenförmigen Spanneinrichtungen 1 auf. Hier ist der Träger 4 mit den backenförmigen Spanneinrichtungen 1 ebenfalls auf einer Grundplatte 9 mit mehreren um den Träger 4 angeordneten Kugelzapfen 10 befestigt. Auf den Kugelköpfen 11 der Kugelzapfen 10 können die in den Figuren 3 und 4 gezeigten stangenförmigen Spanneinrichtungen 2 zur Halterung und Abstützung eines Werkstücks montiert werden.

Im Unterschied zur Ausführungsform der Figuren 1 und 2 weisen die backenförmigen Spanneinrichtungen 1 nicht jeweils zwei gegeneinander bewegbare Spannbacken 3, sondern nur jeweils eine radial verschiebbare Spannbacke 27 mit zwei unter einem Winkel zueinander angeordneten seitlichen Spannflächen 28 auf. Die Spannflächen 28 sind auch hier konkav ausgebildet und sind als Vertiefungen mit einem kreisbogenförmigen Querschnitt ausgeführt. Die Spannbacken 27 sind derart ausgestaltet und so auf dem Träger 4 angeordnet, dass zwischen den einander zugewandten Spannflächen 28 zweier aufeinanderfolgender Spannbacken 27 ein zur Aufnahme eines Hilfselements dienender Klemmspalt 29 gebildet ist, dessen Breite durch Radialbewegung der Spannbacken 27 vergrößert oder verkleinert werden kann.

Bei dem in den Figuren 5 und 6 gezeigten Ausführungsbespiel sind vier in Art eines Vierbackenfutters angeordnete Spannbacken 27 zur Bildung von vier im Umfangsrichtung um 90° versetzter Klemmspalte 29 vorgesehen. Die Spannbacken 27 weisen im Wesentlichen die Form eines gleichseitigen Dreiecks mit zwei unter einem Winkel von 90° zueinander angeordneten seitlichen Spannflächen 28 auf. Durch eine radiale Verschiebung der Spannbacken 27 nach innen, wird der Abstand zwischen den einander gegenüberliegenden Spannflächen 28 zweier aufeinanderfolgender Spannbacken 27 verringert, so dass die Breite der Klemmspalte 29 verringert und ein Hilfselement zwischen den seitlichen Spannflächen 28 zweier aufeinanderfolgender Spannbacken 27 gespannt werden kann.

Zur Halterung eines Werkstücks 1 mit drei voneinander beabstandeten Hilfselementen kann die Spannvorrichtung 6 aber auch in Art eines Dreibackenfutters mit drei in Umfangsrichtung des Futterkörpers um jeweils 120° versetzten Spannbackenträgern und drei gegeneinander verfahrbaren Spannbacken ausgeführt sein. Dann können die Spannbacken als Kreissegmente mit einem Winkel von 120° zwischen den beiden Seitenflächen ausgeführt sein. Auch andere Winkelaufteilungen sind möglich.

Wie aus Figur 6 hervorgeht, sind die Spannbacken 27 bei der in Figur 5 gezeigten Ausführung auf vier in Umfangsrichtung um 90° versetzten, innerhalb einer Deckplatte 30 radial verschiebbar geführten Spannbackenträgern 31 befestigt. Die radiale Bewegung der Spannbackenträger 31 erfolgt durch einen Antrieb, der in der gezeigten Ausführung einen innerhalb einer oberen Zylinderbohrung 32 im Träger 4 axial verschiebbar angeordneten Kolben 33 umfasst. Der Kolben 33 ist über vier hier als Kniehebel ausgebildete Übertragungselemente 34 mit den Spannbackenträgern 31 verbunden. Über die Übertragungselemente 34 ist der pneumatisch oder hydraulisch verschiebbare Kolben 33 so mit den Spannbackenträgern 31 verbunden, dass bei einer Aufwärtsbewegung des Kolbens 33 die Spannbackenträger 31 über die als Kniehebel ausgebildeten Übertragungselemente 34 radial nach innen verfahren, so dass sich die an den Seitenflächen der Spannbacken 27 vorgesehenen Spannflächen 28 zusammenbewegen und dadurch die Hilfselemente formschlüssig klemmen. Durch Abwärtsbewegung des Kolbens 33 werden die Spannbackenträger 31 dagegen radial nach außen bewegt, so dass die an den Seitenflächen der Spannbacken 27 vorgesehenen Spannflächen 28 auseinanderbewegen und dadurch die Hilfselemente freigeben.

In einer zentralen Durchgangsöffnung 35 des Kolbens 33 ist ein axial beweglicher Stößel 36 zur Betätigung einer hier nicht gezeigten Ausstoßeinrichtung angeordnet. Der Stößel 36 wird durch eine Feder 37 nach oben in eine Ausstoßrichtung gedrückt und weist an seinem unteren Ende einen Betätigungskolben 38 auf. Der Betätigungskolben 38 des Stößels 36 ist in einer in einer an die obere Zylinderbohrung 32 anschließenden unteren Zylinderbohrung 39 des Trägers 4 axial verschiebbar angeordnet. Wird der zwischen dem Kolben 33 und dem Betätigungskolben 38 innerhalb der oberen und unteren Zylinderbohrung 32 bzw. 39 begrenzte Druckraum 40 mit Druckluft oder einem Hydraulikfluid beaufschlagt, verfährt der Kolben 33 nach oben, so dass die Spannbackenträger 31 über die als Kniehebel ausgebildeten Übertragungselemente 34 radial nach innen verfahren und sich die an den Seitenflächen der Spannbacken 27 vorgesehenen Spannflächen 28 zusammenbewegen. Gleichzeitig verfährt der Betätigungskolben 38 nach unten, so dass sich der Stößel 36 in eine eingezogene Position bewegt.

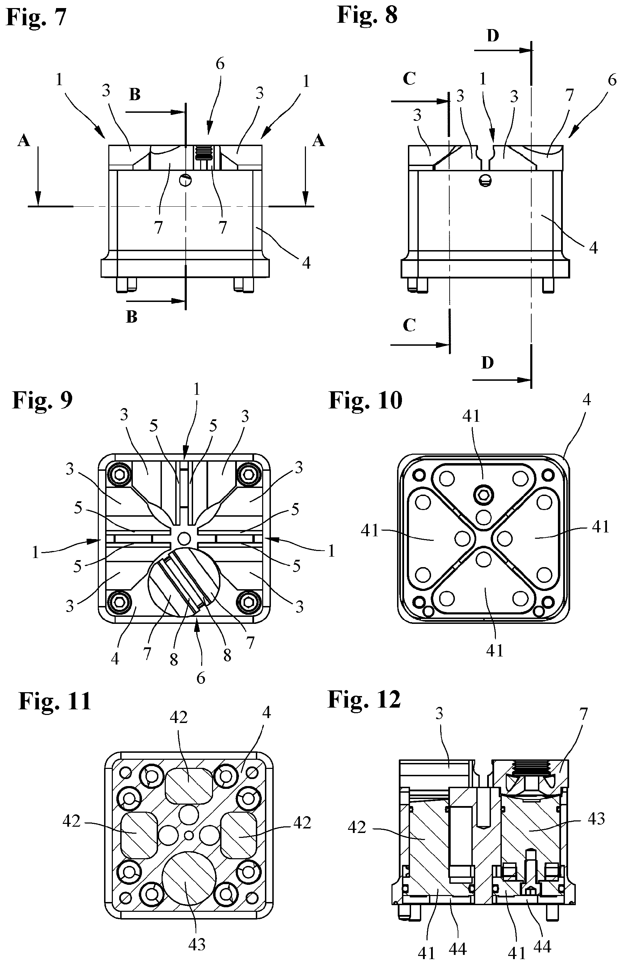

In den Figuren 7 bis 13 ist die in Figur 2 dargestellte zentrale Spanneinheit mit den drei Spanneinrichtungen 1 und der zusätzlichen drehbaren Spanneinrichtung 6 in verschiedenen Ansichten gezeigt. Bei dieser Ausführung sind die Spannbacken 3 der Spanneinrichtungen 1 und die Spannbacken 7 der drehbaren Spanneinrichtung 6 paarweise durch jeweils einen gesonderten Antrieb verstellbar. Die Antriebe sind als Kolbenantrieb mit in Figur 10 erkennbaren dreieckigen Kolben 41 und in Figur 11 erkennbaren Kolbenstangen 42 und 43 ausgebildet. Durch die dreieckige Form der in entsprechenden Druckkammern 44 im Inneren des Trägers 4 verschiebbar angeordneten Kolben 41 kann der zur Verfügung stehende Raum innerhalb des Trägers 4 zur Maximierung der Spannkraft optimal ausgenutzt werden. Wie aus Figur 11 hervorgeht, weisen die Kolbenstangen 42 zur Verstellung jeweils zweier Spannbacken 3 einen rechteckigen Querschnitt auf und sind gegen Verdrehen gesichert im Träger 4 geführt. Die Kolbenstange 43 zur Verstellung der beiden Spannbacken 7 der drehbaren Spanneinrichtung 6 weist dagegen einen runden Querschnitt auf. Dadurch kann die Drehung der Spanneinrichtung 6 relativ zum Träger 4 ermöglicht werden.

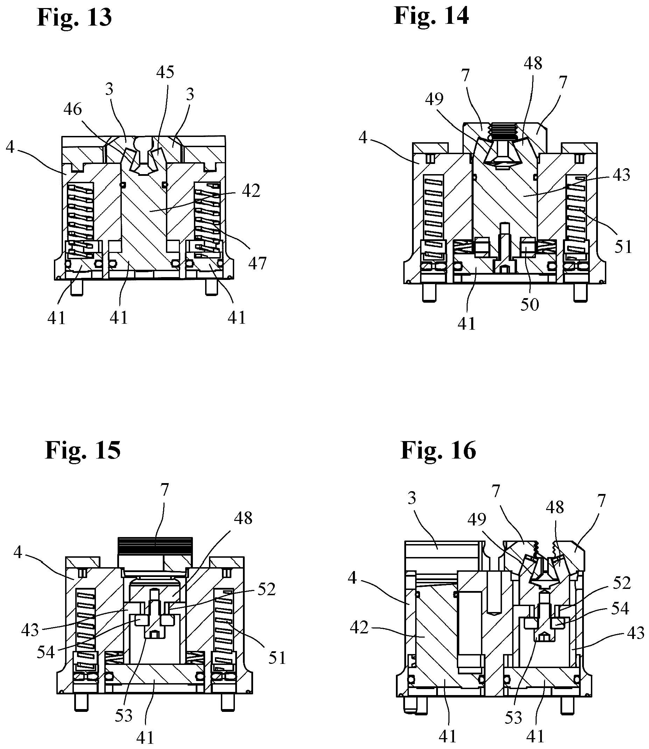

Die gegenseitige Verstellung zweier Spannbacken 3 der stationären Spanneinrichtungen 1 erfolgt durch eine in Figur 13 gezeigte Keilverstellung mit einem am oberen Ende der Kolbenstange 42 vorgesehenen Spannkeil 45 und entsprechenden Gegenflächen 46 an den Spannbacken 3. Der Kolbenantrieb mit der Keilverstellung ist derart ausgelegt, dass die beiden Spannbacken 3 durch eine Abwärtsbewegung des Kolbens 41 und der Kolbenstange 42 zum Spannen zusammengezogen werden. Durch im Träger 4 angeordnete Federn 47 werden die Kolben 41 zusätzlich nach unten gedrückt. Dadurch kann die Spannkraft erhöht werden.

Die gegenseitige Verstellung der beiden Spannbacken 7 der zusätzliche drehbaren Spanneinrichtung 6 erfolgt ebenfalls durch einen Kolbenantrieb und eine in Figur 14 gezeigte Keilverstellung mit einem am oberen Ende der Kolbenstange 43 vorgesehenen Spannkeil 48 und entsprechenden Gegenflächen 49 an den Spannbacken 7. Der Kolbenantrieb mit der Keilverstellung ist derart ausgelegt, dass durch eine Abwärtsbewegung der Kolbenstange 43 die beiden Spannbacken 7 zum Spannen zusammengezogen werden. Die Kolbenstange 43 ist durch eine entsprechende Lagerung 50 drehbar mit dem Kolben 41 verbunden. Alternativ kann der Kolben 41 als drehbarer Rundkolben ausgeführt sein. Durch im Träger 4 angeordnete Federn 51 wird der Kolben 41 mit der Kolbenstange 43 zusätzlich nach unten gedrückt.

Bei einer in den Figuren 15 und 16 gezeigten Alternative sind die Spannbacken 7 der zusätzlichen Spanneinrichtung 6 schwimmend gelagert. Der Spannkeil 48 ist als gesondertes, quer zur Längsachse der Kolbenstange 43 bewegliches Bauteil ausgeführt. Bei der gezeigten Ausführung ist der Spannkeil 48 über einen Zapfen mit einem radialen Spiel innerhalb einer Bohrung 52 der Kolbenstange 43 zu dieser quer beweglich angeordnet und über eine Schraube 53 und eine Scheibe 54 axial gesichert. Dadurch ist der Spannkeil 48 relativ zur Kolbenstange 43 in der X- und Y-Richtung beweglich und die Spannbacken 7 können sich in der X- und Y-Richtung zur Anpassung an das zu spannende Bauteil bewegen.

### Bezugszeichenliste

- 1: Backenförmige Spanneinrichtung
- 2: Stangenförmige Spanneinrichtung
- 3: Spannbacke
- 4: Träger
- 5: Spannfläche
- 6: Zusätzliche Spanneinrichtung
- 7: Spannbacke
- 8: Spannprofil
- 9: Grundplatte
- 10: Kugelzapfen
- 11: Kugelkopf
- 12: Außensechskant
- 13: Unteres Stangenteil
- 14: Oberes Stangenteil
- 15: Außengewinde
- 16: Klemmbereich
- 17: Überwurfmutter
- 18: Spannbacke
- 19: Spannklaue
- 20: Spannklaue
- 21: Schlitz
- 22: Hülse
- 23: Spannschraube
- 24: Halteteil
- 25: Kugelzapfen
- 26: Bohrung
- 27: Spannbacke
- 28: Spannfläche
- 29: Klemmspalt
- 30: Deckplatte
- 31: Spannbackenträger
- 32: Obere Zylinderbohrung
- 33: Kolben
- 34: Übertragungselement
- 35: Durchgangsöffnung
- 36: Stößel
- 37: Feder
- 38: Betätigungskolben
- 39: Untere Zylinderbohrung
- 40: Druckraum
- 41: Kolben
- 42: Kolbenstange
- 43: Kolbenstange
- 44: Druckraum
- 45: Spannkeil
- 46: Gegenfläche
- 47: Feder
- 48: Spannkeil
- 49: Gegenfläche
- 50: Lagerung
- 51: Feder
- 52: Bohrung
- 53: Schraube
- 54: Scheibe

## Patentansprüche

1. Spannvorrichtung mit mindestens drei Spanneinrichtungen (1; 2), die gegeneinander bewegbare Spannflächen (5; 20; 28) zum Spannen von mindestens drei an einem Werkstück beabstandet angeordneter Hilfselemente aufweisen, **dadurch gekennzeichnet, dass** die Spannflächen (5; 20; 28) konkav ausgebildet sind.

2. Spannvorrichtung nach Anspruch 1, **dadurch gekennzeichnet, dass** die Spanneinrichtungen (1; 2) als backenförmige Spanneinrichtungen (1) mit gegeneinander verfahrbaren Spannbacken (3; 27) und/oder als stangenförmige Spanneinrichtungen (2) mit gegeneinander bewegbaren Spannklauen (18, 19) ausgebildet sind.

3. Spannvorrichtung nach Anspruch 2, **dadurch gekennzeichnet, dass** die Spannflächen (5; 28) an den gegeneinander verfahrbaren Spannbacken (3; 27) der backenförmigen Spanneinrichtungen (1) als Vertiefungen mit einem kreisbogenförmigen Querschnitt ausgebildet sind.

4. Spannvorrichtung nach Anspruch 2 oder 3, **dadurch gekennzeichnet, dass** die Spannflächen (20) an den gegeneinander bewegbaren Spannklauen (18, 19) der stangenförmigen Spanneinrichtungen (2) als kugelsegmentförmige Vertiefungen ausgebildet sind.

5. Spannvorrichtung nach einem der Ansprüche 2 bis 4, **dadurch gekennzeichnet, dass** die backenförmigen Spanneinrichtungen (1) an einem gemeinsamen Träger (4) angeordnet sind.

6. Spannvorrichtung nach Anspruch 5, **dadurch gekennzeichnet, dass** an dem Träger (4) eine oder mehrere weitere backenförmige Spanneinrichtungen (6) mit drehbar oder schwimmend angeordneten Spannbacken (7) vorgesehen sind.

7. Spannvorrichtung nach Anspruch 5 oder 6, **dadurch gekennzeichnet, dass** um den Träger (4) mehrere voneinander beabstandete Kugelzapfen (10) zur Befestigung der stangenförmigen Spanneinrichtungen (2) angeordnet sind.

8. Spannvorrichtung nach einem der Ansprüche 2 bis 7, **dadurch gekennzeichnet, dass** die backenförmigen Spanneinrichtungen (1) jeweils zwei gegeneinander bewegbare Spannbacken (3) mit jeweils einer Spannfläche (5) aufweisen.

9. Spannvorrichtung nach einem der Ansprüche 2 bis 7, **dadurch gekennzeichnet, dass** die backenförmigen Spanneinrichtungen (1) jeweils eine radial verschiebbare Spannbacke (27) mit zwei unter einem Winkel zueinander angeordneten seitlichen Spannflächen (28) aufweisen.

10. Spannvorrichtung nach einem der Ansprüche 2 bis 9, **dadurch gekennzeichnet, dass** die stangenförmigen Spanneinrichtungen (2) eine teleskopierbare Stange mit einem rohrförmigen unteren Stangenteil (13) und einem in dem unteren Stangenteil (13) verschiebbar geführten stabförmigen oberen Stangenteil (14) enthalten.

11. Spannvorrichtung nach Anspruch 10, **dadurch gekennzeichnet, dass** das rohrförmige untere Stangenteil (13) an seinem oberen Ende einen mit einem Außengewinde (15) versehenen Klemmbereich (16) enthält, auf dem eine Überwurfmutter (17) zur Klemmung des stabförmigen oberen Stangenteils (13) angeordnet ist.

12. Spannvorrichtung nach Anspruch 10 oder 11, **dadurch gekennzeichnet, dass** an dem unteren Ende des unteren Stangenteils (13) und dem oberen Ende des oberen Stangenteils (14) Spannelemente mit zwei gegeneinander beweglichen Spannklauen (18, 19) angeordnet sind.

13. Spannvorrichtung nach Anspruch 12, **dadurch gekennzeichnet, dass** die Spannklauen (18, 19) am unteren Stangenteil (13) und am oberen Stangenteil (14) durch eine Spannschraube (23) klemmbar sind.

14. Spannvorrichtung nach einem der Ansprüche 10 bis 13, **dadurch gekennzeichnet, dass** an dem oberen Stangenteil (14) ein oder mehrere Kugelzapfen (25) angeordnet sind.

15. Spannvorrichtung nach einem der Ansprüche 2 bis 14, **dadurch gekennzeichnet, dass** die Spannbacken (3, 7; 27) der backenförmigen Spanneinrichtungen (1, 6) durch einen gemeinsamen Antrieb (33, 34) oder durch gesonderte Antriebe (42, 43, 44, 48, 49) für jeweils zwei zusammengehörige Spannbacken verstellbar sind.

16. Spannvorrichtung nach Anspruch 15, **dadurch gekennzeichnet, dass** die gesonderten Antriebe (42, 43, 44, 48, 49) als Kolbenantrieb mit einer Keilverstellung ausgebildet sind.
